# EUROPEAN PATENT APPLICATION

(11) **EP 4 761 433 A1**
(43) Date of publication of application: **17.06.2026**
(21) Application number: 24853484.4
(22) Date of filing: 18.07.2024
(51) Int. Cl.: H04W 72/232

(54) **INFORMATION PROCESSING METHOD AND APPARATUS, AND READABLE STORAGE MEDIUM**

(30) Priority: 11.08.2023 CN 202311014619
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); XING, Yanping, Beijing 100085 (CN); GAO, Xuejuan, Beijing 100085 (CN)
(74) Representative: Studio Torta S.p.A.
(86) International application number: PCT/CN2024/106075
(87) International publication number: WO 2025/036072

(57) **Abstract**

An information processing method, an information processing apparatus and a readable storage medium are provided, and the present disclosure relates to the field of communications technology, so as to reduce the complexity of scheduling by a network device. The information processing method includes: receiving first DCI sent by het network device, wherein the first DCI is used to indicate to cancel or disable a first SBFD symbol set; and determining the first SBFD symbol set based on the first DCI.

## Description

This application claims a priority of the Chinese patent application No. 202311014619.3 filed on August 11, 2023 and entitled "information processing method and apparatus, and readable storage medium", the entirety of which is incorporated herein by reference.

### TECHNICAL FIELD

The present disclosure relates to the field of communications technology, in particular to an information processing method, an information processing apparatus, and a readable storage medium.

### BACKGROUND

In the related art, such a research direction as non-overlapping sub-band full duplex (SBFD) has been proposed, i.e., frequency-domain resources are divided into a plurality of sub-bands not overlapping with each other, and an uplink frequency-domain resource and a downlink frequency-domain resource are located at different sub-bands.

With respect to a symbol including uplink or downlink sub-band (or SBFD symbol for short), there is no mechanism for dynamically configuring the SBFD symbol in the related art.

### SUMMARY

An object of the present disclosure is to provide an information processing method, an information processing apparatus and a readable storage medium, so as to reduce the complexity of scheduling by a network device.

In a first aspect, the present disclosure provides in some embodiments an information processing method, applied to a terminal, including: receiving first Downlink Control Information (DCI) sent by a network device, wherein the first DCI is used to indicate to cancel or disable a first SBFD symbol set; and determining a first SBFD symbol set based on the first DCI.

In some embodiments of the present disclosure, the first DCI includes User Equipment (UE)-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

In some embodiments of the present disclosure, the determining the first SBFD symbol set based on the first DCI includes: determining the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, and determining one symbol set in the K SBFD symbol sets as the first SBFD symbol set according to the first indication information or the second indication information; or determining K SBFD symbol sets according to a signaling sent by the network device, and determining one SBFD symbol set in the K SBFD symbol sets as the first SBFD symbol set according to the first indication information or the second indication information.

In some embodiments of the present disclosure, the first indication information is indicated through one or more of a Frequency-Domain Resource Allocation (FDRA) field, a Redundancy Version (RV) field, a New Data Indicator (NDI) field, a Modulation and Coding Scheme (MCS) field, and a Hybrid Automatic Repeat reQuest (HARQ) process number field.

In some embodiments of the present disclosure, the information processing method further includes: determining a valid time for canceling or disabling the first SBFD symbol set; wherein the valid time is a single SBFD configuration period, or the valid time is a plurality of consecutive SBFD configuration periods.

In some embodiments of the present disclosure, the valid time is an SBFD configuration period where the first DCI is located, or an L^{th} SBFD configuration period after the SBFD configuration period where the first DCI is located; or the valid time is a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is received within one SBFD configuration period, contents indicated by the plurality of pieces of first DCI are determined to be the same; or in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

In some embodiments of the present disclosure, the information processing method further includes: sending feedback information via a Media Access Control Control Element (MAC CE), and the feedback information is used to indicate whether the first DCI is received.

In some embodiments of the present disclosure, the information processing method further includes one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

In some embodiments of the present disclosure, the information processing method further includes: receiving third information sent by the network device, and determining SBFD symbol configuration information according to the third information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are determined according to the SBFD symbol configuration information.

In a second aspect, the present disclosure provides in some embodiments an information processing method, applied to a network device, including: sending first DCI to a terminal, wherein the first DCI is used to indicate to cancel or disable a first SBFD symbol set.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

In some embodiments of the present disclosure, the first SBFD symbol set is determined through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, wherein the first SBFD symbol set is one symbol set in the K SBFD symbol sets indicated through the first indication information or the second indication information; or configuring K SBFD symbol sets for the terminal through a signaling, wherein the first SBFD symbol set is one SBFD symbol set in the K SBFD symbol sets indicated through the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the second indication information is used to indicate a symbol or slot corresponding to the first SBFD symbol set in the form of a bitmap; or the second indication information includes a start position and a length of a target symbol or a target slot, wherein the target symbol or the target slot is a symbol or slot included in the first SBFD symbol set.

In some embodiments of the present disclosure, the information processing method further includes: sending third information to the terminal, wherein the third information is used to indicate SBFD symbol configuration information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are indicated through the SBFD symbol configuration information.

In some embodiments of the present disclosure, the information processing method further includes: determining a valid time for canceling or disabling the first SBFD symbol set; wherein the valid time is a single SBFD configuration period, or the valid time is a plurality of consecutive SBFD configuration periods.

In some embodiments of the present disclosure, the valid time for canceling or disabling the first SBFD symbol set is: an SBFD configuration period where the first DCI is located, or an L^{th} SBFD configuration period after the SBFD configuration period where the first DCI is located; or a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is sent within one SBFD configuration period, contents indicated by the plurality of pieces of first DCI are the same; or in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

In some embodiments of the present disclosure, the information processing method further includes: receiving feedback information sent by the terminal via an MAC CE, wherein the feedback information is used to indicate whether the first DCI is received.

In some embodiments of the present disclosure, the information processing method further includes one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

In a third aspect, the present disclosure provides in some embodiments an information processing apparatus, applied to a terminal, including a memory, a transceiver and a processor. The memory is configured to store therein a computer program; the transceiver is configured to receive and send data under the control of the processor; and the processor is configured to read the computer program in the memory to: receive first DCI sent by a network device, wherein the first DCI is used to indicate to cancel or disable a first SBFD symbol set; and determine a first SBFD symbol set based on the first DCI.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

In some embodiments of the present disclosure, the processor is further configured to read the computer program in the memory to: determine the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, and determining one symbol set in the K SBFD symbol sets as the first SBFD symbol set according to the first indication information or the second indication information; or determining K SBFD symbol sets according to a signaling sent by the network device, and determining one SBFD symbol set in the K SBFD symbol sets as the first SBFD symbol set according to the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the second indication information is used to indicate a symbol or slot corresponding to the first SBFD symbol set in the form of a bitmap; or the second indication information includes a start position and a length of a target symbol or a target slot, wherein the target symbol or the target slot is a symbol or slot included in the first SBFD symbol set.

In some embodiments of the present disclosure, the processor is further configured to read the computer program in the memory to: determine a valid time for canceling or disabling the first SBFD symbol set; wherein the valid time is a single SBFD configuration period, or the valid time is a plurality of consecutive SBFD configuration periods.

In some embodiments of the present disclosure, the valid time is an SBFD configuration period where the first DCI is located, or an L^{th} SBFD configuration period after the SBFD configuration period where the first DCI is located; or the valid time is a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is received within one SBFD configuration period, contents indicated by the plurality of pieces of first DCI are determined to be the same; or in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

In some embodiments of the present disclosure, the processor is further configured to read the computer program in the memory to: send feedback information via an MAC CE, and the feedback information is used to indicate whether the first DCI is received.

In some embodiments of the present disclosure, the processor is further configured to read the computer program in the memory to perform one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

In some embodiments of the present disclosure, the processor is further configured to read the computer program in the memory to: receive third information sent by the network device, and determine SBFD symbol configuration information according to the third information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are determined according to the SBFD symbol configuration information.

In a fourth aspect, the present disclosure provides in some embodiments an information processing apparatus, applied to a network device, including a memory, a transceiver and a processor. The memory is configured to store therein a computer program; the transceiver is configured to receive and send data under the control of the processor; and the processor is configured to read the computer program in the memory to: send first DCI to a terminal, wherein the first DCI is used to indicate to cancel or disable a first SBFD symbol set.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

In some embodiments of the present disclosure, the processor is further configured to read the computer program in the memory to: determine the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, wherein the first SBFD symbol set is one symbol set in the K SBFD symbol sets indicated through the first indication information or the second indication information; or configuring K SBFD symbol sets for the terminal through a signaling, wherein the first SBFD symbol set is one SBFD symbol set in the K SBFD symbol sets indicated through the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the second indication information is used to indicate a symbol or slot corresponding to the first SBFD symbol set in the form of a bitmap; or the second indication information includes a start position and a length of a target symbol or a target slot, wherein the target symbol or the target slot is a symbol or slot included in the first SBFD symbol set.

In some embodiments of the present disclosure, the processor is further configured to read the computer program in the memory to: send third information to the terminal, and the third information is used to indicate SBFD symbol configuration information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are indicated through the SBFD symbol configuration information.

In some embodiments of the present disclosure, the processor is further configured to read the computer program in the memory to: determine a valid time for canceling or disabling the first SBFD symbol set; wherein the valid time is a single SBFD configuration period, or the valid time is a plurality of consecutive SBFD configuration periods.

In some embodiments of the present disclosure, the valid time for canceling or disabling the first SBFD symbol set is: an SBFD configuration period where the first DCI is located, or an L^{th} SBFD configuration period after the SBFD configuration period where the first DCI is located; or a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is sent within one SBFD configuration period, contents indicated by the plurality of pieces of first DCI are the same; or in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

In some embodiments of the present disclosure, the processor is further configured to read the computer program in the memory to: receive feedback information sent by the terminal via an MAC CE, and the feedback information is used to indicate whether the first DCI is received.

In some embodiments of the present disclosure, the processor is further configured to read the computer program in the memory to perform one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

In a fifth aspect, the present disclosure provides in some embodiments an information processing apparatus, applied to a terminal, including: a first reception unit configured to receive first DCI sent by a network device, wherein the first DCI is used to indicate to cancel or disable a first SBFD symbol set; and a first determination unit configured to determine the first SBFD symbol set based on the first DCI.

In a sixth aspect, the present disclosure provides in some embodiments an information apparatus, applied to a network device, including: a first sending unit configured to send first DCI, wherein the first DCI is used to indicate to cancel or disable a first SBFD symbol set.

In a seventh aspect, the present disclosure provides in some embodiments a processor-readable storage medium storing therein a computer program. The computer program is executed by a processor to implement the steps of the above-mentioned information processing methods.

In the embodiments of the present disclosure, the network device explicitly cancels or disables the SBFD symbol through the first DCI, so as to achieve a dynamic SBFD function, thereby to reduce the complexity of scheduling by the network device.

### BRIEF DESCRIPTION OF THE DRAWINGS

Fig. 1 is a flow chart of an information processing method according to an embodiment of the present disclosure;
Fig. 2 is another flow chart of the information processing method according to an embodiment of the present disclosure;
Fig. 3 is a schematic view of an information processing apparatus according to an embodiment of the present disclosure;
Fig. 4 is another schematic view of the information processing apparatus according to an embodiment of the present disclosure;
Fig. 5 is yet another schematic view of the information processing apparatus according to an embodiment of the present disclosure; and
Fig. 6 is still yet another schematic view of the information processing apparatus according to an embodiment of the present disclosure.

### DETAILED DESCRIPTION

The expression "and/or" in the embodiments of the present disclosure is used to describe a relationship between associated objects, and it may include three relationships. For example, "A and/or B" may represent that, there is only A, there are both A and B, and there is only B. Further, the symbol "/" usually refers to "or".

The expression "a plurality of" refers to two or more, and the other quantifiers are similar.

The technical solutions in the embodiments of the present disclosure will be described hereinafter in a clear and complete manner in conjunction with the drawings. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

The present disclosure provides in some embodiments an information processing method and an information processing apparatus, so as to reduce the complexity of scheduling by a network device.

The method and the apparatus are provided on the basis of a same inventive concept, and a principle of the method for solving the problem is similar to that of the apparatus, so the implementation of the apparatus may refer to that of the method.

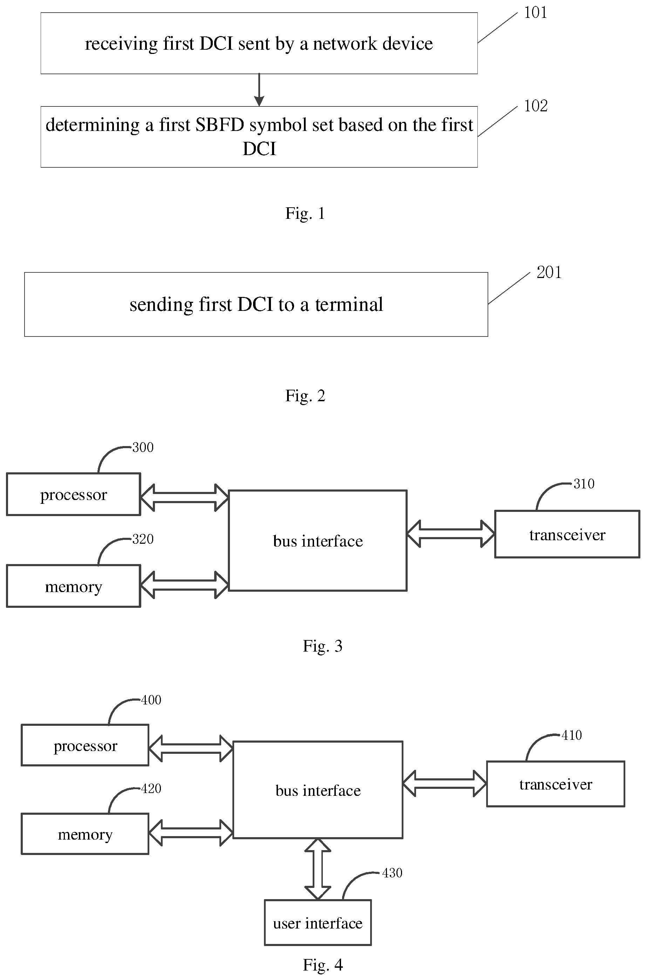

Fig. 1 is a flow chart of an information processing method provided in an embodiment of the present disclosure. As shown in Fig. 1, the information processing method is applied to a terminal, and includes the following steps.

Step 101: receiving first DCI sent by a network device. The first DCI is used to indicate to cancel or disable a first SBFD symbol set.

The first DCI includes UE-specific DCI and/or group common DCI.

The UE-specific DCI is scrambled through a Cell Radio Network Temporary Identifier (C-RNTI) or a Configured Scheduling RNTI (CS-RNTI), and it includes one or more of DCI format 0_0, DCI format 0_1, DCI format 0_2, DCI format 1_0, DCI format 1_1 and DCI format 1_2. The group common DCI includes one or both of DCI format 4_1 and DCI format 4_2.

In some embodiments of the present disclosure, the terminal further receives third information sent by the network device, and determines SBFD symbol configuration information according to the third information. The first SBFD symbol set includes all of or part of SBFD symbols within an SBFD symbol configuration period, and the SBFD symbol configuration period and all the SBFD symbols within the SBFD symbol configuration period are determined according to the SBFD symbol configuration information.

The SBFD symbol configuration information includes a size of the SBFD symbol configuration period, all SBFD symbols for forming the first SBFD symbol set within the SBFD symbol configuration period, etc.

In the embodiments of the present disclosure, the first DCI indicates to cancel or disable the first SBFD symbol set in various modes. The canceling or disabling is indicated through the DCI, so it is dynamic.

First mode: the first DCI includes first indication information, and the first indication information is used to indicate to cancel or disable the first SBFD symbol set.

Second mode: the first DCI includes first indication information, and the first indication information is used to indicate to cancel or disable the first SBFD symbol set, and indicate information about the first SBFD symbol set. In other words, in this mode, apart from indicating to cancel or disable the first SBFD symbol set, the first indication information is further used to indicate the information about the first SBFD symbol set.

Third mode: the first DCI includes first indication information and second indication information, the first indication information is used to indicate to cancel or disable the first SBFD symbol set, and the second indication information is used to indicate the information about the first SBFD symbol set. In other words, in this mode, the first indication information and the second indication information are used to indicate to cancel or disable the first SBFD symbol set and indicate the information about the first SBFD symbol set respectively.

The information about the first SBFD symbol set includes the quantity of symbols in the first SBFD symbol set, positions of the symbols in the first SBFD symbol set, etc.

In the embodiments of the present disclosure, the first indication information is indicated through one or more of an FDRA field, an RV field, an NDI field, an MCS field, and an HARQ process number field.

For example, in the first mode or the third mode, the first indication information is indicated through one or more of the followings. (1) The first indication information is indicated through an FDRA field, and the FDRA field includes all-zero or all-one bits. (2) The first indication information is indicated through an RV field, and the RV field includes non-all-zero bits. For example, for DCI scrambled through a CS-RNTI, the RV field includes non-all-zero bits to indicate to cancel or disable the first SBFD symbol set. (3) The first indication information is indicated through an NDI field and an MCS field, the NDI field indicates initial transmission, and the MCS field is 11111, 11110, 11101 or 11100. (4) The first indication information is indicated through an NDI field and an RV field, the NDI field indicates 0, and the RV field includes non-all-zero bits. (5) The first indication information is indicated through an RV field and an HARQ process number field, and the RV field and/or the HARQ process number field include non-all-0 bits. (6) The first indication information is indicated through an RV field, an HARQ process number field, an MCS field and an FDRA field, and one or more of the following conditions are met: the HARQ process number field includes non-all-zero bits, the RV field includes non-all-zero bits, the MCS field includes non-all-one bits, and the FDRA field includes non-all-one bits. (7) The first indication information is indicated through an RV field, an MCS field and an FDRA field, and one or more of the following conditions are met: the RV field includes non-all-zero bits, the MCS field includes non-all-one bits, and the FDRA field includes non-all-one bits.

The above-mentioned (4) to (7) are particularly suitable for the DCI scrambled through the CS-RNTI.

For example, in the second mode, the first indication information is indicated through one or more of the followings. (1) The first indication information is indicated through an RV field, the RV field includes non-all-zero bits, and different states of the RV field are used to indicate the information about the first SBFD symbol sets. For example, for the DCI scrambled through the CS-RNTI, the RV field includes two bits, bit states 01, 10, 11 are used to indicate that the first DCI is used to cancel or disable SBFD symbols, and the three bit states indicate different SBFD symbol sets. (2) The first indication information is indicated through an NDI field and an MCS field, the NDI field indicates initial transmission, and the MCS field is 11111, 11110, 11101 or 11100. Different states of the MCS field are used to indicate the information about the first SBFD symbol set. (3) The first indication information is indicated through an RV field and an HARQ process number field, the RV field and/or the HARQ process number field include non-all-zero bits, and different states of the HARQ process number field and different states of the RV fields are used in combination to indicate the information about the first SBFD symbol set. For example, for the DCI scrambled through the CS-RNTI, in a case that the HARQ process number field includes 4 bits and the RV field includes 2 bits, there are four states, i.e., a state where the HARQ process number field indicates 1111 and the RV field indicates 00, a state where the HARQ process number field indicates 1111 and the RV field indicates 01, a state where the HARQ process number field indicates 1111 and the RV field indicates 10, and a state where the HARQ process number field indicates 1111 and the RV field indicates 11, and each state in the four states indicates one SBFD symbol set.

For example, in the third mode, the second indication information indicates a symbol or slot corresponding to the first SBFD symbol set in the form of a bitmap. For example, on the basis of an existing DCI format, one or more existing fields are set to indicate the SBFD symbol set in the form of a bitmap. Alternatively, the second indication information includes a start position and a length of a target symbol or a target slot, and the target symbol or the target slot is a symbol or slot included in the first SBFD symbol set. For example, the start position and the length of the target symbol or the target slot are indicated through a TDRA field.

Step 102: determining the first SBFD symbol set based on the first DCI.

In the embodiments of the present disclosure, the terminal determines the first SBFD symbol set in any of the following modes.

First mode: the first SBFD symbol set is determined according to an agreement.

Information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer.

In this mode, the terminal or the network device determines the first SBFD symbol set according to the agreement. Upon the receipt of the first DCI, the terminal determines that the network device has canceled or disabled the first SBFD symbol set, and the terminal determines the first SBFD symbol set according to the agreement.

Second mode: K SBFD symbol sets are determined according to an agreement, and one symbol set in the K SBFD symbol sets is determined as the first SBFD symbol set according to the first indication information or the second indication information.

In this mode, the terminal determines the K SBFD symbol sets according to the agreement, and then determines one symbol set in the K SBFD symbol sets as the first SBFD symbol set according to the first indication information or the second indication information.

Third mode: K SBFD symbol sets are determined according to a signaling (e.g., Radio Resource Control (RRC) signaling) sent by the network device, and one SBFD symbol set in the K SBFD symbol sets is determined as the first SBFD symbol set according to the first indication information or the second indication information.

In this mode, the terminal determines the K SBFD symbol sets according to the signaling, and then determines one SBFD symbol set in the K SBFD symbol sets as the first SBFD symbol set according to the first indication information or the second indication information.

In the embodiments of the present disclosure, the network device implicitly cancels or disables the SBFD symbols through the first DCI, so as to achieve a dynamic SBFD function, thereby to reduce the complexity of scheduling by the network device.

In the embodiments of the present disclosure, the terminal further sends feedback information via an MAC CE, and the feedback information is used to indicate whether the first DCI is received. In other words, regardless of the DCI scrambled through the CS-RNTI or the C-RNTI, the terminal sends the feedback information through the MAC CE.

In the embodiments of the present disclosure, a certain valid time is further provided to cancel or disable the first SBFD symbol set. Hence, the terminal determines the valid time for canceling or disabling the first SBFD symbol set, so as to facilitate a corresponding operation performed by the terminal. The valid time is a single SBFD configuration period, or the valid time is a plurality of consecutive SBFD configuration periods.

For example, the valid time is an SBFD configuration period where the first DCI is located, or an L^{th} SBFD configuration period after the SBFD configuration period where the first DCI is located; or the valid time is a plurality of consecutive SBFD configuration periods starting from the SBFD configuration period where the first DCI is located or from a P^{th} SBFD configuration period after the SBFD configuration period where the first DCI is located, where L and P are integers greater than 0, and L and P are predefined or configured by the network device through RRC signaling. In this case, the plurality of consecutive SBFD configuration periods persists until a next piece of first DCI is received by the terminal.

In the embodiments of the present disclosure, it may be speculated that the terminal does not want to receive a plurality of pieces of first DCI within one SBFD configuration period, i.e., the terminal does not support to receive a plurality of pieces of first DCI within one SBFD configuration period, so as to prevent the frequent reception of the DCI. Hence, correspondingly, the network device does not send a plurality of pieces of first DCI within one SBFD configuration period.

Alternatively, it may also be speculated in a protocol that at most one piece of first DCI is sent within one SBFD configuration period.

Alternatively, the quantity of pieces of first DCI to be sent within one SBFD configuration period will not be particularly defined herein, but as speculated in an agreement, contents indicated by a plurality of pieces of first DCI sent within one SBFD configuration period are the same. Hence, the terminal determines, according to the agreement, that the contents indicated by the plurality of pieces of first DCI received within one SBFD configuration period are the same.

Alternatively, a plurality of pieces of first DCI is supported to be sent within one SBFD configuration period. For example, in a case that at most a plurality of pieces of first DCI is received within one SBFD configuration period, contents indicated by the plurality of pieces of first DCI may be the same or different. For example, in a case that the terminal receives a plurality of pieces of first DCI within one SBFD configuration period, the terminal determines that contents indicated by a first portion of the plurality of pieces of first DCI are the same or different, and contents indicated by a second portion of the plurality of pieces of first DCI are the same. The contents indicated by the second portion of the plurality of pieces of first DCI are the same as the contents indicated by a last piece of first DCI in the first portion of the plurality of pieces of first DCI.

To be specific, as constrained in the protocol, at most T (T is an integer greater than 1) pieces of first DCI is sent within one SBFD configuration period, and contents indicated by the T pieces of first DCI are the same or different; or the quantity of pieces of first DCI within one SBFD configuration period is not particularly defined, contents indicated by a first piece to a T^{th} piece of first DCI are the same or different, and contents indicated by a (T+1)^{th} piece of first DCI and the subsequent pieces of first DCI within the SBFD configuration period are constrained to be the same as contents indicated by the T^{th} piece of first DCI. Hence, according to the agreement, the terminal determines the contents indicated by the first piece to the T^{th} piece of first DCI, and determines that the contents indicated by the (T+1)^{th} piece of first DCI and the subsequent pieces of first DCI within the SBFD configuration period are the same as contents indicated by the T^{th} piece of first DCI, where T is predefined in the protocol or indicated by the network device.

Upon the receipt of the first DCI, the terminal performs one or more of the following steps.

In a case that the canceled or disabled first SBFD symbol set includes a first target symbol and the first target symbol is a symbol configured as a downlink symbol D or a flexible symbol F through a cell-level common configuration, a position corresponding to the first target symbol is determined as a downlink symbol D after the first SBFD symbol set is canceled or disabled. At this time, in a case that a transmission direction scheduled or configured in all downlink symbols is uplink, the terminal may discard or delay the uplink transmission.

In a case that the canceled or disabled first SBFD symbol set includes a second target symbol and the second target symbol is a symbol configured as a flexible symbol F (e.g., configured through TDD-UL-DL-ConfigCommon), a position corresponding to the second target symbol is determined as an uplink symbol U after the first SBFD symbol set is canceled or disabled. At this time, in a case that a transmission direction scheduled or configured in all downlink symbols is downlink, the terminal may discard or delay the downlink transmission.

In a case that the canceled or disabled first SBFD symbol set includes a third target symbol and the third target symbol is a symbol configured as a flexible symbol F (e.g., configured through TDD-UL-DL-ConfigCommon), a position corresponding to the third target symbol is determined as a flexible symbol F after the first SBFD symbol set is canceled or disabled, and conflict processing is performed according to a processing mode of the flexible symbol F.

In a case that the canceled or disabled first SBFD symbol set includes a fourth target symbol and the fourth target symbol is a symbol configured as a flexible symbol F (e.g., configured through TDD-UL-DL-ConfigCommon), a transmission direction on a frequency-domain resource corresponding to an uplink sub-band in the fourth target symbol is determined as downlink after the first SBFD symbol set is canceled or disabled. In a case that the transmission direction on the frequency-domain resource corresponding to the uplink sub-band in the fourth target symbol is uplink, the terminal may discard or delay the uplink transmission.

Fig. 2 is a flow chart of an information processing method provided in an embodiment of the present disclosure. As shown in Fig. 2, the information processing method is applied to a network device and includes the following step.

Step 201: sending first DCI to a terminal. The first DCI is used to indicate to cancel or disable a first SBFD symbol set.

Specific implementation forms of the first DCI may refer to the description in the above-mentioned method embodiments.

In the embodiments of the present disclosure, the network device determines the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, wherein the first SBFD symbol set is one symbol set in the K SBFD symbol sets indicated through the first indication information or the second indication information; or configuring K SBFD symbol sets for the terminal according to a signaling (e.g., RRC signaling), wherein the first SBFD symbol set is one SBFD symbol set in the K SBFD symbol sets indicated through the first indication information or the second indication information.

In the embodiments of the present disclosure, specific indication modes of the first indication information and the second indication information may refer to the description in the above-mentioned embodiments.

In the embodiments of the present disclosure, the network device explicitly cancels or disables the SBFD symbols through the first DCI, so as to achieve a dynamic SBFD function, thereby to reduce the complexity of scheduling by the network device.

In some embodiments of the present disclosure, the network device further sends third information to the terminal, and the third information is used to indicate SBFD symbol configuration information. The first SBFD symbol set includes all of or part of SBFD symbols within an SBFD symbol configuration period, and the SBFD symbol configuration period and all the SBFD symbols within the SBFD symbol configuration period are indicated through the SBFD symbol configuration information.

In some embodiments of the present disclosure, the network device further determines a valid time for canceling or disabling the first SBFD symbol set, and the valid time is a single SBFD configuration period, or the valid time is a plurality of consecutive SBFD configuration periods.

For example, the valid time is an SBFD configuration period where the first DCI is located, or an L^{th} SBFD configuration period after the SBFD configuration period where the first DCI is located; or the valid time is a plurality of consecutive SBFD configuration periods starting from the SBFD configuration period where the first DCI is located or from a P^{th} SBFD configuration period after the SBFD configuration period where the first DCI is located, where L and P are integers greater than 0, and L and P are predefined or configured by the network device through RRC signaling. In this case, the plurality of consecutive SBFD configuration periods persists until a next piece of first DCI is sent.

In the embodiments of the present disclosure, it may be speculated that the terminal does not want to receive a plurality of pieces of first DCI within one SBFD configuration period, i.e., the terminal does not support to receive a plurality of pieces of first DCI within one SBFD configuration period, so as to prevent the frequent reception of the DCI. Hence, correspondingly, the network device does not send a plurality of pieces of first DCI within one SBFD configuration period.

Alternatively, it may also be speculated in a protocol that at most one piece of first DCI is sent within one SBFD configuration period. Hence, the network device sends one piece of first DCI within one SBFD configuration period.

Alternatively, the quantity of pieces of first DCI to be sent within one SBFD configuration period will not be particularly defined herein, but as speculated in an agreement, contents indicated by a plurality of pieces of first DCI sent within one SBFD configuration period are the same. Hence, the network device sends a plurality of pieces of first DCI within one SBFD configuration period, and the contents indicated by the plurality of pieces of first DCI sent within one SBFD configuration period are the same.

Alternatively, a plurality of pieces of first DCI is supported to be sent within one SBFD configuration period. For example, as constrained in the protocol, at most T pieces of first DCI is sent within one SBFD configuration period. Hence, the network device sends at most a plurality of pieces of first DCI within one SBFD configuration period, and contents indicated by the plurality of pieces of first DCI are the same or different. For example, the network device sends a plurality of pieces of first DCI within one SBFD configuration period, contents indicated by a first portion of the plurality of pieces of first DCI are the same or different, and contents indicated by a second portion of the plurality of pieces of first DCI are the same. The contents indicated by the second portion of the plurality of pieces of first DCI are the same as the contents indicated by a last piece of first DCI in the first portion of the plurality of pieces of first DCI.

To be specific, as constrained in the protocol, at most T (T is an integer greater than 1) pieces of first DCI is sent within one SBFD configuration period, and contents indicated by the T pieces of first DCI are the same or different; or the quantity of pieces of first DCI within one SBFD configuration period is not particularly defined, contents indicated by a first piece to a T^{th} piece of first DCI are the same or different, and contents indicated by a (T+1)^{th} piece of first DCI and the subsequent pieces of first DCI within the SBFD configuration period are constrained to be the same as contents indicated by the T^{th} piece of first DCI, where T is predefined in the protocol or indicated by the network device.

In some embodiments of the present disclosure, the network device further receives feedback information sent by the terminal through an MAC CE, and the feedback information is used to indicate whether the first DCI is received.

In some embodiments of the present disclosure, the network device further performs one or more of the following steps.

In a case that the canceled or disabled first SBFD symbol set includes a first target symbol and the first target symbol is a symbol configured as a downlink symbol D or a flexible symbol F (e.g., configured through TDD-UL-DL-ConfigCommon), a position corresponding to the first target symbol is determined as a downlink symbol D after the first SBFD symbol set is canceled or disabled. In a case that a transmission direction configured in the symbol is uplink, the network device may discard or delay the reception.

In a case that the canceled or disabled first SBFD symbol set includes a second target symbol and the second target symbol is a symbol configured as a flexible symbol F (e.g., configured through TDD-UL-DL-ConfigCommon), a position corresponding to the second target symbol is determined as an uplink symbol U after the first SBFD symbol set is canceled or disabled. In a case that a transmission direction configured in the symbol is downlink, the network device may discard or delay the reception.

In a case that the canceled or disabled first SBFD symbol set includes a third target symbol and the third target symbol is a symbol configured as a flexible symbol F (e.g., configured through TDD-UL-DL-ConfigCommon), a position corresponding to the third target symbol is determined as a flexible symbol F after the first SBFD symbol set is canceled or disabled, and conflict processing is performed according to a processing mode of the flexible symbol F.

In a case that the canceled or disabled first SBFD symbol set includes a fourth target symbol and the fourth target symbol is a symbol configured as a flexible symbol F (e.g., configured through TDD-UL-DL-ConfigCommon), a transmission direction on a frequency-domain resource corresponding to an uplink sub-band in the fourth target symbol is determined as downlink after the first SBFD symbol set is canceled or disabled. In a case that the transmission direction on the frequency-domain resource corresponding to the uplink sub-band in the fourth target symbol is uplink, the network device may discard or delay the reception.

In some embodiments of the present disclosure, the terminal further receives third information sent by the network device, and determines SBFD symbol configuration information according to the third information. The first SBFD symbol set includes all SBFD symbols within an SBFD symbol configuration period, and the SBFD symbol configuration period and all the SBFD symbols within the SBFD symbol configuration period are determine according to the SBFD symbol configuration information.

The technical solutions in the embodiments of the present disclosure may be applied to various systems, especially a 5^{th} Generation Mobile Communication Technology (5G) system. For example, an applicable system may be Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5G New Radio (NR) system. Each of these systems includes a terminal device and a network device. Each system further includes a core network part, e.g., an Evolved Packet System (EPS) or 5G system (5GS).

The terminal device involved in the embodiments of the present disclosure is a device for providing voice and/or data connectivity to a user, a handheld device having a wireless connection function, or any other processing device connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal device, e.g., a mobile phone (or cellular phone), or a computer having the mobile terminal device, e.g., a portable, pocket-sized, handheld, built-in or vehicle-mounted mobile device, which exchanges voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). The wireless terminal device may also be called as system, subscriber unit, subscriber station, mobile station, mobile, remote station, access point, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO transmission is performed between the network device and the terminal device with one or more antennae, and the MIMO transmission is Single User MIMO (SU-MIMO) or Multiple User MIMO (MU-MIMO). Depending on the form of an antenna combination and the quantity of antennae, the MIMO transmission may be 2-Dimensional MIMO (2D-MIMO), 3-Dimensional MIMO (3D-MIMO), Full Dimension MIMO (FD-MIMO) or massive-MIMO, and it may also be diversity transmission, precoding transmission or beamforming transmission.

As shown in Fig. 3, the present disclosure provides in some embodiments an information processing apparatus which is applied to a network device and which includes: a processor 300 configured to read a program in a memory 320 to send first DCI to a terminal, wherein the first DCI is used to indicate to cancel or disable a first SBFD symbol set; and a transceiver 310 configured to receive and send data under the control of the processor 300.

In Fig. 3, bus architecture may include a number of buses and bridges connected to each other, so as to connect various circuits for one or more processors 300 and one or more memories 320. In addition, as is known in the art, the bus architecture may be used to connect any other circuits, such as a circuit for a peripheral device, a circuit for a voltage stabilizer and a power management circuit, which will not be particularly defined herein. A bus interface may be provided, and the transceiver 310 may consist of a plurality of elements, i.e., a transmitter and a receiver for communication with any other devices over a transmission medium. The processor 300 may take charge of managing the bus architecture as well as general processings. The memory 320 may store therein data for the operation of the processor 300.

The processor 300 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor 300 may take charge of managing the bus architecture as well as general processing. The memory 320 may store therein data for the operation of the processor 300.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

The processor 300 is further configured to read the program to determine the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, wherein the first SBFD symbol set is one symbol set in the K SBFD symbol sets indicated through the first indication information or the second indication information; or configuring K SBFD symbol sets for the terminal through a signaling, wherein the first SBFD symbol set is one SBFD symbol set in the K SBFD symbol sets indicated through the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the first indication information is indicated in one or more of the following modes. The first indication information is indicated through an FDRA field, and the FDRA field includes all-zero bits or all-one bits; the first indication information is indicated through an RV field, and the RV field includes non-all-zero bits; the first indication information is indicated through an NDI field and an MCS field, the NDI field indicates initial transmission, and the MCS field is 11111, 11110, 11101 or 11100; the first indication information is indicated through an NDI field and an RV field, the NDI field indicates 0, and the RV field includes non-all-zero bits; the first indication information is indicated through an RV field and an HARQ process number field, and the RV field and/or the HARQ process number field include non-all-zero bits; the first indication information is indicated through an RV field, an HARQ process number field, an MCS field and an FDRA field, and one or more of the following conditions are met: the HARQ process number field includes non-all-zero bits, the RV field includes non-all-zero bits, the MCS field includes non-all-one bits, and the FDRA field includes non-all-one bits; or the first indication information is indicated through an RV field, an MCS field and an FDRA field, and one or more of the following conditions are met: the RV field includes non-all-zero bits, the MCS field includes non-all-one bits, and the FDRA field includes non-all-one bits.

In some embodiments of the present disclosure, the first indication information is indicated in one or more of the following modes. The first indication information is indicated through an RV field, the RV field includes non-all-zero bits, and different states of the RV field are used to indicate the information about the first SBFD symbol set; the first indication information is indicated through an NDI field and an MCS field, the NDI field indicates initial transmission, the MCS field is 11111, 11110, 11101 or 111000, and different states of the MCS field are used to indicate the information about the first SBFD symbol set; or the first indication information is indicated through an RV field and an HARQ process number field, the RV field and/or the HARQ process number field include non-all-zero bits, and different states of the HARQ process number field and different states of the RV field are used in combination to indicate the information about the first SBFD symbol set.

In some embodiments of the present disclosure, the second indication information is used to indicate a symbol or a slot corresponding to the first SBFD symbol set in the form of a bitmap; or the second indication information includes a start position and a length of a target symbol or a target slot, and the target symbol or the target slot is a symbol or slot included in the first SBFD symbol set.

The processor 300 is further configured to read the program to send third information to the terminal, and the third information is used to indicate SBFD symbol configuration information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are indicated through the SBFD symbol configuration information.

The processor 300 is further configured to read the program to determine a valid time for canceling or disabling the first SBFD symbol set, and the valid time is a single SBFD configuration period, or the valid time is a plurality of consecutive SBFD configuration periods.

In some embodiments of the present disclosure, the valid time for canceling or disabling the first SBFD symbol set is: an SBFD configuration period where the first DCI is located, or an L^{th} SBFD configuration period after the SBFD configuration period where the first DCI is located; or a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is sent within one SBFD configuration period, contents indicated by the plurality of pieces of first DCI are the same; or in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

The processor 300 is further configured to read the program to receive feedback information sent by the terminal via an MAC CE, and the feedback information is used to indicate whether the first DCI is received.

The processor 300 is further configured to read the program to: in a case that the canceled or disabled first SBFD symbol set includes a first target symbol and the first target symbol is a symbol configured as a downlink symbol D or a flexible symbol F through a cell-level common configuration, determine that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determine that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determine that a position corresponding to the third target symbol is a flexible symbol F after the first SBFD symbol set is canceled or disabled, and perform conflict processing according to a processing mode of the flexible symbol F; and in a case that the canceled or disabled first SBFD symbol set includes a fourth target symbol and the fourth target symbol is a symbol configured as a flexible symbol F, determine that a transmission direction on a frequency-domain resource corresponding to an uplink sub-band in the fourth target symbol is downlink after the first SBFD symbol set is canceled or disabled.

It should be appreciated that, the apparatus provided in the embodiments of the present disclosure is used to implement all the steps in the above-mentioned method embodiments with a same technical effect, and contents which are the same as those in the above-mentioned method embodiments and the beneficial effects will not be particularly defined herein.

As shown in Fig. 4, the present disclosure provides in some embodiments an information processing apparatus which is applied to a terminal and includes: a processor 400 configured to read a program in a memory 420 to: receive first DCI sent by a network device, wherein the first DCI is used to indicate to cancel or disable a first SBFD symbol set; and determine the first SBFD symbol set based on the first DCI; and a transceiver 410 configured to receive and send data under the control of the processor 400.

In Fig. 4, bus architecture may include a number of buses and bridges connected to each other, so as to connect various circuits for one or more processors 400 and one or more memories 420. In addition, as is known in the art, the bus architecture may be used to connect any other circuits, such as a circuit for a peripheral device, a circuit for a voltage stabilizer and a power management circuit, which will not be particularly defined herein. A bus interface may be provided, and the transceiver 410 may consist of a plurality of elements, i.e., a transmitter and a receiver for communication with any other devices over a transmission medium. With respect to different UEs, a user interface 430 may also be provided for devices which are to be arranged inside or outside the UE, and these devices may include but not limited to a keypad, a display, a speaker, a microphone and a joystick.

The processor 400 may take charge of managing the bus architecture as well as general processing. The memory 420 may store therein data for the operation of the processor 400.

The processor 400 is a CPU, an ASIC, an FPGA or a CPLD. The processor may also use multi-core architecture.

The processor calls the computer program in the memory to implement any method provided in the embodiments of the present disclosure according to an obtained executable instruction. The processor may also be physically separated from the memory.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

The processor 400 is further configured to read the program to determine the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, and determining one symbol set in the K SBFD symbol sets as the first SBFD symbol set according to the first indication information or the second indication information; or determining K SBFD symbol sets according to a signaling sent by the network device, and determining one SBFD symbol set in the K SBFD symbol sets as the first SBFD symbol set according to the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the first indication information is indicated in one or more of the following modes. The first indication information is indicated through an FDRA field, and the FDRA field includes all-zero bits or all-one bits; the first indication information is indicated through an RV field, and the RV field includes non-all-zero bits; the first indication information is indicated through an NDI field and an MCS field, the NDI field indicates initial transmission, and the MCS field is 11111, 11110, 11101 or 11100; the first indication information is indicated through an NDI field and an RV field, the NDI field indicates 0, and the RV field includes non-all-zero bits; the first indication information is indicated through an RV field and an HARQ process number field, and the RV field and/or the HARQ process number field include non-all-zero bits; the first indication information is indicated through an RV field, an HARQ process number field, an MCS field and an FDRA field, and one or more of the following conditions are met: the HARQ process number field includes non-all-zero bits, the RV field includes non-all-zero bits, the MCS field includes non-all-one bits, and the FDRA field includes non-all-one bits; or the first indication information is indicated through an RV field, an MCS field and an FDRA field, and one or more of the following conditions are met: the RV field includes non-all-zero bits, the MCS field includes non-all-one bits, and the FDRA field includes non-all-one bits.

In some embodiments of the present disclosure, the first indication information is indicated in one or more of the following modes. The first indication information is indicated through an RV field, the RV field includes non-all-zero bits, and different states of the RV field are used to indicate the information about the first SBFD symbol set; the first indication information is indicated through an NDI field and an MCS field, the NDI field indicates initial transmission, the MCS field is 11111, 11110, 11101 or 111000, and different states of the MCS field are used to indicate the information about the first SBFD symbol set; or the first indication information is indicated through an RV field and an HARQ process number field, the RV field and/or the HARQ process number field include non-all-zero bits, and different states of the HARQ process number field and different states of the RV field are used in combination to indicate the information about the first SBFD symbol set.

In some embodiments of the present disclosure, the second indication information is used to indicate a symbol or a slot corresponding to the first SBFD symbol set in the form of a bitmap; or the second indication information includes a start position and a length of a target symbol or a target slot, and the target symbol or the target slot is a symbol or slot included in the first SBFD symbol set.

The processor 400 is further configured to read the program to determine a valid time for canceling or disabling the first SBFD symbol set, and the valid time is a single SBFD configuration period, or the valid time is a plurality of consecutive SBFD configuration periods.

In some embodiments of the present disclosure, the valid time is an SBFD configuration period where the first DCI is located, or an L^{th} SBFD configuration period after the SBFD configuration period where the first DCI is located; or the valid time is a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is received within one SBFD configuration period, contents indicated by the plurality of pieces of first DCI are determined to be the same; or in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

The processor 400 is further configured to read the program to send feedback information via an MAC CE, and the feedback information is used to indicate whether the first DCI is received.

The processor 400 is further configured to read the program to perform one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

The processor 400 is further configured to read the program to receive third information sent by the network device, and determine SBFD symbol configuration information according to the third information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are determined according to the SBFD symbol configuration information.

It should be appreciated that, the apparatus provided in the embodiments of the present disclosure is used to implement all the steps in the above-mentioned method embodiments with a same technical effect, and contents which are the same as those in the above-mentioned method embodiments and the beneficial effects will not be particularly defined herein.

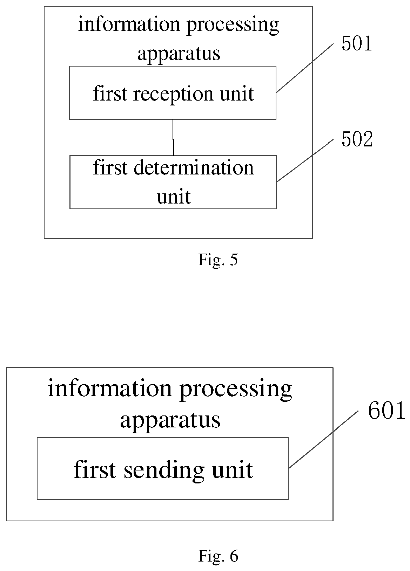

As shown in Fig. 5, the present disclosure provides in some embodiments an information processing apparatus which is applied to a terminal and includes: a first reception unit 501 configured to receive first DCI sent by a network device, wherein the first DCI is used to indicate to cancel or disable a first SBFD symbol set; and a first determination unit 502 configured to determine the first SBFD symbol set based on the first DCI.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

In some embodiments of the present disclosure, the first determination unit is further configured to determine the first SBFD symbol set through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, and determining one symbol set in the K SBFD symbol sets as the first SBFD symbol set according to the first indication information or the second indication information; or determining K SBFD symbol sets according to a signaling sent by the network device, and determining one SBFD symbol set in the K SBFD symbol sets as the first SBFD symbol set according to the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the first indication information is indicated in one or more of the following modes. The first indication information is indicated through an FDRA field, and the FDRA field includes all-zero bits or all-one bits; the first indication information is indicated through an RV field, and the RV field includes non-all-zero bits; the first indication information is indicated through an NDI field and an MCS field, the NDI field indicates initial transmission, and the MCS field is 11111, 11110, 11101 or 11100; the first indication information is indicated through an NDI field and an RV field, the NDI field indicates 0, and the RV field includes non-all-zero bits; the first indication information is indicated through an RV field and an HARQ process number field, and the RV field and/or the HARQ process number field include non-all-zero bits; the first indication information is indicated through an RV field, an HARQ process number field, an MCS field and an FDRA field, and one or more of the following conditions are met: the HARQ process number field includes non-all-zero bits, the RV field includes non-all-zero bits, the MCS field includes non-all-one bits, and the FDRA field includes non-all-one bits; or the first indication information is indicated through an RV field, an MCS field and an FDRA field, and one or more of the following conditions are met: the RV field includes non-all-zero bits, the MCS field includes non-all-one bits, and the FDRA field includes non-all-one bits.

In some embodiments of the present disclosure, the first indication information is indicated in one or more of the following modes. The first indication information is indicated through an RV field, the RV field includes non-all-zero bits, and different states of the RV field are used to indicate the information about the first SBFD symbol set; the first indication information is indicated through an NDI field and an MCS field, the NDI field indicates initial transmission, the MCS field is 11111, 11110, 11101 or 111000, and different states of the MCS field are used to indicate the information about the first SBFD symbol set; or the first indication information is indicated through an RV field and an HARQ process number field, the RV field and/or the HARQ process number field include non-all-zero bits, and different states of the HARQ process number field and different states of the RV field are used in combination to indicate the information about the first SBFD symbol set.

In some embodiments of the present disclosure, the second indication information is used to indicate a symbol or a slot corresponding to the first SBFD symbol set in the form of a bitmap; or the second indication information includes a start position and a length of a target symbol or a target slot, and the target symbol or the target slot is a symbol or slot included in the first SBFD symbol set.

In some embodiments of the present disclosure, the information processing apparatus further includes a second determination unit configured to determine a valid time for canceling or disabling the first SBFD symbol set, and the valid time is a single SBFD configuration period, or the valid time is a plurality of consecutive SBFD configuration periods.

In some embodiments of the present disclosure, the valid time is an SBFD configuration period where the first DCI is located, or an L^{th} SBFD configuration period after the SBFD configuration period where the first DCI is located; or the valid time is a plurality of consecutive SBFD configuration periods starting from the SBFD configuration period where the first DCI is located or from a P^{th} SBFD configuration period after the SBFD configuration period where the first DCI is located, where L and P are integers greater than 0.

in a case that a plurality of pieces of first DCI is received within one SBFD configuration period, contents indicated by the plurality of pieces of first DCI are determined to be the same; or in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

In some embodiments of the present disclosure, the information processing apparatus further includes a first sending unit configured to send feedback information via an MAC CE, and the feedback information is used to indicate whether the first DCI is received.

In some embodiments of the present disclosure, the information processing apparatus further includes a first processing unit configured to perform one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

In some embodiments of the present disclosure, the information processing apparatus further includes a second reception unit configured to receive third information sent by the network device, and determine SBFD symbol configuration information according to the third information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are determined according to the SBFD symbol configuration information.

It should be appreciated that, the apparatus provided in the embodiments of the present disclosure is used to implement all the steps in the above-mentioned method embodiments with a same technical effect, and contents which are the same as those in the above-mentioned method embodiments and the beneficial effects will not be particularly defined herein.

As shown in Fig. 6, the present disclosure provides in some embodiments an information processing apparatus which is applied to a network device and includes a first sending unit 601 configured to send first DCI to a terminal, and the first DCI is used to indicate to cancel or disable a first SBFD symbol set.

In some embodiments of the present disclosure, the first DCI includes UE-specific DCI and/or group common DCI.

In some embodiments of the present disclosure, the first DCI includes first indication information, and the first indication information is used to indicate to cancel or disable the first SBFD symbol set; or the first DCI includes first indication information, and the first indication information is used to indicate to cancel or disable the first SBFD symbol set, and indicate information about the first SBFD symbol set; or the first DCI includes first indication information and second indication information, the first indication information is used to indicate to cancel or disable the first SBFD symbol set, and the second indication information is used to indicate the information about the first SBFD symbol set.

In some embodiments of the present disclosure, the first SBFD symbol set is determined through any of: determining the first SBFD symbol set according to an agreement, wherein information in the agreement includes taking N consecutive symbols or slots as the first SBFD symbol set starting from an (n+M)^{th} symbol or slot, where n is a symbol or slot within which the first DCI is received, M is an integer greater than or equal to 0, and N is a positive integer; determining K SBFD symbol sets according to an agreement, wherein the first SBFD symbol set is one symbol set in the K SBFD symbol sets indicated through the first indication information or the second indication information; or configuring K SBFD symbol sets for the terminal through a signaling, wherein the first SBFD symbol set is one SBFD symbol set in the K SBFD symbol sets indicated through the first indication information or the second indication information.

In some embodiments of the present disclosure, the first indication information is indicated through one or more of an FDRA field, an RV field, an NDI field, an MCS field, and an HARQ process number field.

In some embodiments of the present disclosure, the first indication information is indicated in one or more of the following modes. The first indication information is indicated through an FDRA field, and the FDRA field includes all-zero bits or all-one bits; the first indication information is indicated through an RV field, and the RV field includes non-all-zero bits; the first indication information is indicated through an NDI field and an MCS field, the NDI field indicates initial transmission, and the MCS field is 11111, 11110, 11101 or 11100; the first indication information is indicated through an NDI field and an RV field, the NDI field indicates 0, and the RV field includes non-all-zero bits; the first indication information is indicated through an RV field and an HARQ process number field, and the RV field and/or the HARQ process number field include non-all-zero bits; the first indication information is indicated through an RV field, an HARQ process number field, an MCS field and an FDRA field, and one or more of the following conditions are met: the HARQ process number field includes non-all-zero bits, the RV field includes non-all-zero bits, the MCS field includes non-all-one bits, and the FDRA field includes non-all-one bits; or the first indication information is indicated through an RV field, an MCS field and an FDRA field, and one or more of the following conditions are met: the RV field includes non-all-zero bits, the MCS field includes non-all-one bits, and the FDRA field includes non-all-one bits.

In some embodiments of the present disclosure, the first indication information is indicated in one or more of the following modes. The first indication information is indicated through an RV field, the RV field includes non-all-zero bits, and different states of the RV field are used to indicate the information about the first SBFD symbol set; the first indication information is indicated through an NDI field and an MCS field, the NDI field indicates initial transmission, the MCS field is 11111, 11110, 11101 or 111000, and different states of the MCS field are used to indicate the information about the first SBFD symbol set; or the first indication information is indicated through an RV field and an HARQ process number field, the RV field and/or the HARQ process number field include non-all-zero bits, and different states of the HARQ process number field and different states of the RV field are used in combination to indicate the information about the first SBFD symbol set.

In some embodiments of the present disclosure, the second indication information is used to indicate a symbol or a slot corresponding to the first SBFD symbol set in the form of a bitmap; or the second indication information includes a start position and a length of a target symbol or a target slot, and the target symbol or the target slot is a symbol or slot included in the first SBFD symbol set.

In some embodiments of the present disclosure, the information processing apparatus further includes a second sending unit configured to send third information to the terminal, and the third information is used to indicate SBFD symbol configuration information.

In some embodiments of the present disclosure, the first SBFD symbol set includes all of or part of SBFD symbols within an SBFD symbol configuration period, and the SBFD symbol configuration period and all the SBFD symbols within the SBFD symbol configuration period are indicated through the SBFD symbol configuration information.

In some embodiment of the present disclosure, the information processing apparatus further includes a second determination unit configured to determine a valid time for canceling or disabling the first SBFD symbol set, and the valid time is a single SBFD configuration period, or the valid time is a plurality of consecutive SBFD configuration periods.

In some embodiments of the present disclosure, the valid time for canceling or disabling the first SBFD symbol set is: an SBFD configuration period where the first DCI is located, or an L^{th} SBFD configuration period after the SBFD configuration period where the first DCI is located; or a plurality of consecutive SBFD configuration periods starting from the SBFD configuration period where the first DCI is located or from a P^{th} SBFD configuration period after the SBFD configuration period where the first DCI is located, where L and P are integers greater than 0.

In some embodiments of the present disclosure, in a case that a plurality of pieces of first DCI is sent within one SBFD configuration period, contents indicated by the plurality of pieces of first DCI are the same; or in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

In some embodiments of the present disclosure, the information processing apparatus further includes a first reception unit configured to receive feedback information sent by the terminal via an MAC CE, and the feedback information is used to indicate whether the first DCI is received.

In some embodiments of the present disclosure, the information processing apparatus further includes a first processing unit configured to perform one or more of: in a case that the canceled or disabled first SBFD symbol set includes a first target symbol and the first target symbol is a symbol configured as a downlink symbol D or a flexible symbol F, determining that a position corresponding to the first target symbol is a downlink symbol D after the first SBFD symbol set is canceled or disabled; in a case that the canceled or disabled first SBFD symbol set includes a second target symbol and the second target symbol is a symbol configured as a flexible symbol F, determining that a position corresponding to the second target symbol is an uplink symbol U after the first SBFD symbol set is canceled or disabled; in a case that the canceled or disabled first SBFD symbol set includes a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and in a case that the canceled or disabled first SBFD symbol set includes a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

It should be appreciated that, the apparatus provided in the embodiments of the present disclosure is used to implement all the steps in the above-mentioned method embodiments with a same technical effect, and contents which are the same as those in the above-mentioned method embodiments and the beneficial effects will not be particularly defined herein.

It should be appreciated that, the units in the embodiments of the present disclosure are for illustrative purposes, they are provided merely on the basis of their logic functions, and an additional division mode may be provided during the actual implementation. In addition, the units may be integrated in a processing unit, or physically separated from each other, or two or more units may be integrated in one unit. The integrated units may be implemented in the form of hardware or a software functional unit.

In a case that the functional units are implemented in a software form and sold or used as a separate product, they may be stored in a processor-readable storage medium. Based on this, the technical solutions of the present disclosure, partial or full, or parts of the technical solutions of the present disclosure contributing to the related art, may appear in the form of software products, which may be stored in a storage medium and include several instructions so as to enable a computer device (a personal computer, a server or network equipment) or a processor to execute all or parts of the steps of the method in the embodiments of the present disclosure. The storage medium includes any medium capable of storing therein program codes, e.g., a universal serial bus (USB) flash disk, a mobile hard disk, a read-only memory (ROM), a random access memory (RAM), a magnetic disk or an optical disk.

The present disclosure further provides in some embodiments a communication device, which includes a memory, a processor, and a program stored in the memory and executed by the processor. The processor is configured to execute the program to implement the steps in the above-mentioned information processing method.

The present disclosure further provides in some embodiments a processor-readable storage medium storing therein a program. The program is executed by a processor so as to implement the above-mentioned information processing method with a same technical effect, which will not be particularly defined herein. The processor-readable storage medium may be any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, such words as "include" or "including" or any other variations involved in the present disclosure intend to provide non-exclusive coverage, so that a process, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the method in the embodiments of the present disclosure may be implemented by software as well as a necessary common hardware platform, or by hardware, and the former may be better in most cases. Based on this, the technical solutions of the present disclosure, or parts of the technical solutions of the present disclosure contributing to the related art, may appear in the form of software products, which may be stored in a storage medium (e.g., ROM/RAM, magnetic disk or optical disk) and include several instructions so as to enable a terminal (mobile phone, computer, server, air conditioner or network device) to execute the method in the embodiments of the present disclosure.

The description has been given hereinabove in conjunction with the drawings and the embodiments, but the present disclosure shall not be limited to the above preferred embodiments. These embodiments are for illustrative purposes only, but shall not be used to limit the scope of the present disclosure. A person skilled in the art may make various alternations or modifications without departing from the spirit of the present disclosure and the scope defined in the appended claims, which also fall within the scope of the present disclosure.

## Claims

1. An information processing method, applied to a terminal, comprising:
receiving first Downlink Control Information (DCI) sent by a network device, wherein the first DCI is used to indicate to cancel or disable a first Sub-Band Full Duplex (SBFD) symbol set; and
determining a first SBFD symbol set based on the first DCI.

2. The information processing method according to claim 1, wherein the first DCI comprises User Equipment (UE)-specific DCI and/or group common DCI.

3. The information processing method according to claim 1, wherein
the first DCI comprises first indication information, and the first indication information is used to indicate to cancel or disable the first SBFD symbol set; or
the first DCI comprises first indication information, and the first indication information is used to indicate to cancel or disable the first SBFD symbol set, and indicate information about the first SBFD symbol set; or
the first DCI comprises first indication information and second indication information, the first indication information is used to indicate to cancel or disable the first SBFD symbol set, and the second indication information is used to indicate the information about the first SBFD symbol set.

4. The information processing method according to claim 3, wherein the determining the first SBFD symbol set based on the first DCI comprises:
determining the first SBFD symbol set through any of:
determining the first SBFD symbol set according to an agreement, wherein information in the agreement comprises taking N consecutive symbols or slots as the first SBFD symbol set starting from an (n+M)^{th} symbol or slot, where n is a symbol or slot within which the first DCI is received, M is an integer greater than or equal to 0, and N is a positive integer;
determining K SBFD symbol sets according to an agreement, and determining one symbol set in the K SBFD symbol sets as the first SBFD symbol set according to the first indication information or the second indication information; or
determining K SBFD symbol sets according to a signaling sent by the network device, and determining one SBFD symbol set in the K SBFD symbol sets as the first SBFD symbol set according to the first indication information or the second indication information.

5. The information processing method according to claim 3, wherein the first indication information is indicated through one or more of a Frequency-Domain Resource Allocation (FDRA) field, a Redundancy Version (RV) field, a New Data Indicator (NDI) field, a Modulation and Coding Scheme (MCS) field, and a Hybrid Automatic Repeat reQuest (HARQ) process number field.

6. The information processing method according to claim 3, wherein
the second indication information is used to indicate a symbol or slot corresponding to the first SBFD symbol set in the form of a bitmap; or
the second indication information comprises a start position and a length of a target symbol or a target slot, wherein the target symbol or the target slot is a symbol or slot comprised in the first SBFD symbol set.

7. The information processing method according to claim 1, further comprising:
determining a valid time for canceling or disabling the first SBFD symbol set;
wherein the valid time is a single SBFD configuration period, or the valid time is a plurality of consecutive SBFD configuration periods.

8. The information processing method according to claim 7, wherein
the valid time is an SBFD configuration period where the first DCI is located, or an L^{th} SBFD configuration period after the SBFD configuration period where the first DCI is located; or
the valid time is a plurality of consecutive SBFD configuration periods starting from the SBFD configuration period where the first DCI is located or from a P^{th} SBFD configuration period after the SBFD configuration period where the first DCI is located,
where L and P are integers greater than 0.

9. The information processing method according to claim 1, wherein
in a case that a plurality of pieces of first DCI is received within one SBFD configuration period, contents indicated by the plurality of pieces of first DCI are determined to be the same; or
in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

10. The information processing method according to claim 1, further comprising:
sending feedback information via a Media Access Control Control Element (MAC CE), wherein the feedback information is used to indicate whether the first DCI is received.

11. The information processing method according to claim 1, further comprising one or more of:
in a case that the canceled or disabled first SBFD symbol set comprises a first target symbol and the first target symbol is a symbol configured as a downlink symbol D or a flexible symbol F, determining that a position corresponding to the first target symbol is a downlink symbol D after the first SBFD symbol set is canceled or disabled;
in a case that the canceled or disabled first SBFD symbol set comprises a second target symbol and the second target symbol is a symbol configured as a flexible symbol F, determining that a position corresponding to the second target symbol is an uplink symbol U after the first SBFD symbol set is canceled or disabled;
in a case that the canceled or disabled first SBFD symbol set comprises a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and
in a case that the canceled or disabled first SBFD symbol set comprises a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

12. The information processing method according to claim 1, further comprising:
receiving third information sent by the network device, and determining SBFD symbol configuration information according to the third information.

13. The information processing method according to claim 12, wherein the first SBFD symbol set comprises all of or part of SBFD symbols within an SBFD symbol configuration period, and the SBFD symbol configuration period and all the SBFD symbols within the SBFD symbol configuration period are determined according to the SBFD symbol configuration information.

14. An information processing method, applied to a network device, comprising:
sending first DCI to a terminal, wherein the first DCI is used to indicate to cancel or disable a first SBFD symbol set.

15. The information processing method according to claim 14, wherein the first DCI comprises UE-specific DCI and/or group common DCI.

16. The information processing method according to claim 14, wherein
the first DCI comprises first indication information, and the first indication information is used to indicate to cancel or disable the first SBFD symbol set; or
the first DCI comprises first indication information, and the first indication information is used to indicate to cancel or disable the first SBFD symbol set, and indicate information about the first SBFD symbol set; or
the first DCI comprises first indication information and second indication information, the first indication information is used to indicate to cancel or disable the first SBFD symbol set, and the second indication information is used to indicate the information about the first SBFD symbol set.

17. The information processing method according to claim 16, wherein the first SBFD symbol set is determined through any of:
determining the first SBFD symbol set according to an agreement, wherein information in the agreement comprises taking N consecutive symbols or slots as the first SBFD symbol set starting from an (n+M)^{th} symbol or slot, where n is a symbol or slot within which the first DCI is received, M is an integer greater than or equal to 0, and N is a positive integer;
determining K SBFD symbol sets according to an agreement, wherein the first SBFD symbol set is one symbol set in the K SBFD symbol sets indicated through the first indication information or the second indication information; or
configuring K SBFD symbol sets for the terminal through a signaling, wherein the first SBFD symbol set is one SBFD symbol set in the K SBFD symbol sets indicated through the first indication information or the second indication information.

18. The information processing method according to claim 16, wherein the first indication information is indicated through one or more of an FDRA field, an RV field, an NDI field, an MCS field, and an HARQ process number field.

19. The information processing method according to claim 16, wherein
the second indication information is used to indicate a symbol or slot corresponding to the first SBFD symbol set in the form of a bitmap; or
the second indication information comprises a start position and a length of a target symbol or a target slot, wherein the target symbol or the target slot is a symbol or slot comprised in the first SBFD symbol set.

20. The information processing method according to claim 14, further comprising:
sending third information to the terminal, wherein the third information is used to indicate SBFD symbol configuration information.

21. The information processing method according to claim 20, wherein the first SBFD symbol set comprises all of or part of SBFD symbols within an SBFD symbol configuration period, and the SBFD symbol configuration period and all the SBFD symbols within the SBFD symbol configuration period are indicated through the SBFD symbol configuration information.

22. The information processing method according to claim 14, further comprising:
determining a valid time for canceling or disabling the first SBFD symbol set;
wherein the valid time is a single SBFD configuration period, or the valid time is a plurality of consecutive SBFD configuration periods.

23. The information processing method according to claim 22, wherein the valid time for canceling or disabling the first SBFD symbol set is:
an SBFD configuration period where the first DCI is located, or an L^{th} SBFD configuration period after the SBFD configuration period where the first DCI is located; or
a plurality of consecutive SBFD configuration periods starting from the SBFD configuration period where the first DCI is located or from a P^{th} SBFD configuration period after the SBFD configuration period where the first DCI is located,
where L and P are integers greater than 0.

24. The information processing method according to claim 14, wherein
in a case that a plurality of pieces of first DCI is sent within one SBFD configuration period, contents indicated by the plurality of pieces of first DCI are the same; or
in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

25. The information processing method according to claim 14, further comprising:
receiving feedback information sent by the terminal via an MAC CE, wherein the feedback information is used to indicate whether the first DCI is received.

26. The information processing method according to claim 14, further comprising one or more of:
in a case that the canceled or disabled first SBFD symbol set comprises a first target symbol and the first target symbol is a symbol configured as a downlink symbol D or a flexible symbol F, determining that a position corresponding to the first target symbol is a downlink symbol D after the first SBFD symbol set is canceled or disabled;
in a case that the canceled or disabled first SBFD symbol set comprises a second target symbol and the second target symbol is a symbol configured as a flexible symbol F, determining that a position corresponding to the second target symbol is an uplink symbol U after the first SBFD symbol set is canceled or disabled;
in a case that the canceled or disabled first SBFD symbol set comprises a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and
in a case that the canceled or disabled first SBFD symbol set comprises a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

27. An information processing apparatus, applied to a terminal, comprising a memory, a transceiver and a processor, wherein
the memory is configured to store therein a computer program; the transceiver is configured to receive and send data under the control of the processor; and the processor is configured to read the computer program in the memory to:
receive first DCI sent by a network device, wherein the first DCI is used to indicate to cancel or disable a first SBFD symbol set; and
determine a first SBFD symbol set based on the first DCI.

28. The information processing apparatus according to claim 27, wherein the first DCI comprises UE-specific DCI and/or group common DCI.

29. The information processing apparatus according to claim 27, wherein
the first DCI comprises first indication information, and the first indication information is used to indicate to cancel or disable the first SBFD symbol set; or
the first DCI comprises first indication information, and the first indication information is used to indicate to cancel or disable the first SBFD symbol set, and indicate information about the first SBFD symbol set; or
the first DCI comprises first indication information and second indication information, the first indication information is used to indicate to cancel or disable the first SBFD symbol set, and the second indication information is used to indicate the information about the first SBFD symbol set.

30. The information processing apparatus according to claim 29, wherein the processor is further configured to read the computer program in the memory to:
determine the first SBFD symbol set through any of:
determining the first SBFD symbol set according to an agreement, wherein information in the agreement comprises taking N consecutive symbols or slots as the first SBFD symbol set starting from an (n+M)^{th} symbol or slot, where n is a symbol or slot within which the first DCI is received, M is an integer greater than or equal to 0, and N is a positive integer;
determining K SBFD symbol sets according to an agreement, and determining one symbol set in the K SBFD symbol sets as the first SBFD symbol set according to the first indication information or the second indication information; or
determining K SBFD symbol sets according to a signaling sent by the network device, and determining one SBFD symbol set in the K SBFD symbol sets as the first SBFD symbol set according to the first indication information or the second indication information.

31. The information processing apparatus according to claim 29, wherein the first indication information is indicated through one or more of an FDRA field, an RV field, an NDI field, an MCS field, and an HARQ process number field.

32. The information processing apparatus according to claim 29, wherein the second indication information is used to indicate a symbol or slot corresponding to the first SBFD symbol set in the form of a bitmap; or
the second indication information comprises a start position and a length of a target symbol or a target slot, wherein the target symbol or the target slot is a symbol or slot comprised in the first SBFD symbol set.

33. The information processing apparatus according to claim 29, wherein the processor is further configured to read the computer program in the memory to:
determine a valid time for canceling or disabling the first SBFD symbol set;
wherein the valid time is a single SBFD configuration period, or the valid time is a plurality of consecutive SBFD configuration periods.

34. The information processing apparatus according to claim 33, wherein the valid time is an SBFD configuration period where the first DCI is located, or an L^{th} SBFD configuration period after the SBFD configuration period where the first DCI is located; or
the valid time is a plurality of consecutive SBFD configuration periods starting from the SBFD configuration period where the first DCI is located or from a P^{th} SBFD configuration period after the SBFD configuration period where the first DCI is located,
where L and P are integers greater than 0.

35. The information processing apparatus according to claim 27, wherein
in a case that a plurality of pieces of first DCI is received within one SBFD configuration period, contents indicated by the plurality of pieces of first DCI are determined to be the same; or
in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

36. The information processing apparatus according to claim 27, wherein the processor is further configured to read the computer program in the memory to:
send feedback information via an MAC CE, and the feedback information is used to indicate whether the first DCI is received.

37. The information processing apparatus according to claim 27, wherein the processor is further configured to read the computer program in the memory to perform one or more of:
in a case that the canceled or disabled first SBFD symbol set comprises a first target symbol and the first target symbol is a symbol configured as a downlink symbol D or a flexible symbol F, determining that a position corresponding to the first target symbol is a downlink symbol D after the first SBFD symbol set is canceled or disabled;
in a case that the canceled or disabled first SBFD symbol set comprises a second target symbol and the second target symbol is a symbol configured as a flexible symbol F, determining that a position corresponding to the second target symbol is an uplink symbol U after the first SBFD symbol set is canceled or disabled;
in a case that the canceled or disabled first SBFD symbol set comprises a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and
in a case that the canceled or disabled first SBFD symbol set comprises a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

38. The information processing apparatus according to claim 27, wherein the processor is further configured to read the computer program in the memory to:
receive third information sent by the network device, and determine SBFD symbol configuration information according to the third information.

39. The information processing apparatus according to claim 38, wherein the first SBFD symbol set comprises all of or part of SBFD symbols within an SBFD symbol configuration period, and the SBFD symbol configuration period and all the SBFD symbols within the SBFD symbol configuration period are determined according to the SBFD symbol configuration information.

40. An information processing apparatus, applied to a network device, comprising a memory, a transceiver and a processor; wherein
the memory is configured to store therein a computer program; the transceiver is configured to receive and send data under the control of the processor; and the processor is configured to read the computer program in the memory to:
send first DCI to a terminal, wherein the first DCI is used to indicate to cancel or disable a first SBFD symbol set.

41. The information processing apparatus according to claim 40, wherein the first DCI comprises UE-specific DCI and/or group common DCI.

42. The information processing apparatus according to claim 40, wherein
the first DCI comprises first indication information, and the first indication information is used to indicate to cancel or disable the first SBFD symbol set; or
the first DCI comprises first indication information, and the first indication information is used to indicate to cancel or disable the first SBFD symbol set, and indicate information about the first SBFD symbol set; or
the first DCI comprises first indication information and second indication information, the first indication information is used to indicate to cancel or disable the first SBFD symbol set, and the second indication information is used to indicate the information about the first SBFD symbol set.

43. The information processing apparatus according to claim 42, wherein the processor is further configured to read the computer program in the memory to: determine the first SBFD symbol set through any of:
determining the first SBFD symbol set according to an agreement, wherein information in the agreement comprises taking N consecutive symbols or slots as the first SBFD symbol set starting from an (n+M)^{th} symbol or slot, where n is a symbol or slot within which the first DCI is received, M is an integer greater than or equal to 0, and N is a positive integer;
determining K SBFD symbol sets according to an agreement, wherein the first SBFD symbol set is one symbol set in the K SBFD symbol sets indicated through the first indication information or the second indication information; or
configuring K SBFD symbol sets for the terminal through a signaling, wherein the first SBFD symbol set is one SBFD symbol set in the K SBFD symbol sets indicated through the first indication information or the second indication information.

44. The information processing apparatus according to claim 42, wherein the first indication information is indicated through one or more of an FDRA field, an RV field, an NDI field, an MCS field, and an HARQ process number field.

45. The information processing apparatus according to claim 42, wherein
the second indication information is used to indicate a symbol or slot corresponding to the first SBFD symbol set in the form of a bitmap; or
the second indication information comprises a start position and a length of a target symbol or a target slot, wherein the target symbol or the target slot is a symbol or slot comprised in the first SBFD symbol set.

46. The information processing apparatus according to claim 40, wherein the processor is further configured to read the computer program in the memory to:
send third information to the terminal, and the third information is used to indicate SBFD symbol configuration information.

47. The information processing apparatus according to claim 46, wherein the first SBFD symbol set comprises all of or part of SBFD symbols within an SBFD symbol configuration period, and the SBFD symbol configuration period and all the SBFD symbols within the SBFD symbol configuration period are indicated through the SBFD symbol configuration information.

48. The information processing apparatus according to claim 40, wherein the processor is further configured to read the computer program in the memory to:
determine a valid time for canceling or disabling the first SBFD symbol set;
wherein the valid time is a single SBFD configuration period, or the valid time is a plurality of consecutive SBFD configuration periods.

49. The information processing apparatus according to claim 48, wherein the valid time for canceling or disabling the first SBFD symbol set is:
an SBFD configuration period where the first DCI is located, or an L^{th} SBFD configuration period after the SBFD configuration period where the first DCI is located; or
a plurality of consecutive SBFD configuration periods starting from the SBFD configuration period where the first DCI is located or from a P^{th} SBFD configuration period after the SBFD configuration period where the first DCI is located,
where L and P are integers greater than 0.

50. The information apparatus according to claim 40, wherein in a case that a plurality of pieces of first DCI is sent within one SBFD configuration period, contents indicated by the plurality of pieces of first DCI are the same; or
in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

51. The information processing apparatus according to claim 40, wherein the processor is further configured to read the computer program in the memory to:
receive feedback information sent by the terminal via an MAC CE, and the feedback information is used to indicate whether the first DCI is received.

52. The information processing apparatus according to claim 40, wherein the processor is further configured to read the computer program in the memory to perform one or more of:
in a case that the canceled or disabled first SBFD symbol set comprises a first target symbol and the first target symbol is a symbol configured as a downlink symbol D or a flexible symbol F, determining that a position corresponding to the first target symbol is a downlink symbol D after the first SBFD symbol set is canceled or disabled;
in a case that the canceled or disabled first SBFD symbol set comprises a second target symbol and the second target symbol is a symbol configured as a flexible symbol F, determining that a position corresponding to the second target symbol is an uplink symbol U after the first SBFD symbol set is canceled or disabled;
in a case that the canceled or disabled first SBFD symbol set comprises a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and
in a case that the canceled or disabled first SBFD symbol set comprises a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

53. An information processing apparatus, applied to a terminal, comprising:
a first reception unit configured to receive first DCI sent by a network device, wherein the first DCI is used to indicate to cancel or disable a first SBFD symbol set; and
a first determination unit configured to determine the first SBFD symbol set based on the first DCI.

54. The information processing apparatus according to claim 53, wherein the first DCI comprises UE-specific DCI and/or group common DCI.

55. The information processing apparatus according to claim 53, wherein the first DCI comprises first indication information, and the first indication information is used to indicate to cancel or disable the first SBFD symbol set; or
the first DCI comprises first indication information, and the first indication information is used to indicate to cancel or disable the first SBFD symbol set, and indicate information about the first SBFD symbol set; or
the first DCI comprises first indication information and second indication information, the first indication information is used to indicate to cancel or disable the first SBFD symbol set, and the second indication information is used to indicate the information about the first SBFD symbol set.

56. The information processing apparatus according to claim 55, wherein the first determination unit is further configured to determine the first SBFD symbol set through any of:
determining the first SBFD symbol set according to an agreement, wherein information in the agreement comprises taking N consecutive symbols or slots as the first SBFD symbol set starting from an (n+M)^{th} symbol or slot, where n is a symbol or slot within which the first DCI is received, M is an integer greater than or equal to 0, and N is a positive integer;
determining K SBFD symbol sets according to an agreement, and determining one symbol set in the K SBFD symbol sets as the first SBFD symbol set according to the first indication information or the second indication information; or
determining K SBFD symbol sets according to a signaling sent by the network device, and determining one SBFD symbol set in the K SBFD symbol sets as the first SBFD symbol set according to the first indication information or the second indication information.

57. The information processing apparatus according to claim 55, wherein the first indication information is indicated through one or more of an FDRA field, an RV field, an NDI field, an MCS field, and an HARQ process number field.

58. The information processing apparatus according to claim 55, wherein the second indication information is used to indicate a symbol or slot corresponding to the first SBFD symbol set in the form of a bitmap; or
the second indication information comprises a start position and a length of a target symbol or a target slot, wherein the target symbol or the target slot is a symbol or slot comprised in the first SBFD symbol set.

59. The information processing apparatus according to claim 53, further comprising:
a second determination unit configured to determine a valid time for canceling or disabling the first SBFD symbol set;
wherein the valid time is a single SBFD configuration period, or the valid time is a plurality of consecutive SBFD configuration periods.

60. The information processing apparatus according to claim 59, wherein the valid time is an SBFD configuration period where the first DCI is located, or an L^{th} SBFD configuration period after the SBFD configuration period where the first DCI is located; or
the valid time is a plurality of consecutive SBFD configuration periods starting from the SBFD configuration period where the first DCI is located or from a P^{th} SBFD configuration period after the SBFD configuration period where the first DCI is located,
where L and P are integers greater than 0.

61. The information processing apparatus according to claim 53, wherein in a case that a plurality of pieces of first DCI is received within one SBFD configuration period, contents indicated by the plurality of pieces of first DCI are determined to be the same; or
in a case that a plurality of pieces of first DCI is received within one SBFD configuration period, contents indicated by a first portion of the plurality of pieces of first DCI are determined to be the same or different, and contents indicated by a second portion of the plurality of pieces of first DCI are determined to be the same.

62. The information processing apparatus according to claim 53, further comprising:
a first sending unit configured to send feedback information via an MAC CE, wherein the feedback information is used to indicate whether the first DCI is received.

63. The information processing apparatus according to claim 53, further comprising: a first processing unit configured to perform one or more of:
in a case that the canceled or disabled first SBFD symbol set comprises a first target symbol and the first target symbol is a symbol configured as a downlink symbol D or a flexible symbol F, determining that a position corresponding to the first target symbol is a downlink symbol D after the first SBFD symbol set is canceled or disabled;
in a case that the canceled or disabled first SBFD symbol set comprises a second target symbol and the second target symbol is a symbol configured as a flexible symbol F, determining that a position corresponding to the second target symbol is an uplink symbol U after the first SBFD symbol set is canceled or disabled;
in a case that the canceled or disabled first SBFD symbol set comprises a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and
in a case that the canceled or disabled first SBFD symbol set comprises a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

64. The information processing apparatus according to claim 53, further comprising:
a second reception unit configured to receive third information sent by the network device, and determine SBFD symbol configuration information according to the third information.

65. The information processing apparatus according to claim 64, wherein the first SBFD symbol set comprises all of or part of SBFD symbols within an SBFD symbol configuration period, and the SBFD symbol configuration period and all the SBFD symbols within the SBFD symbol configuration period are determined according to the SBFD symbol configuration information.

66. An information processing apparatus, applied to a network device, comprising:
a first sending unit configured to send first DCI to a terminal, wherein the first DCI is used to indicate to cancel or disable a first SBFD symbol set.

67. The information processing apparatus according to claim 66, wherein the first DCI comprises UE-specific DCI and/or group common DCI.

68. The information processing apparatus according to claim 66, wherein the first DCI comprises first indication information, and the first indication information is used to indicate to cancel or disable the first SBFD symbol set; or
the first DCI comprises first indication information, and the first indication information is used to indicate to cancel or disable the first SBFD symbol set, and indicate information about the first SBFD symbol set; or
the first DCI comprises first indication information and second indication information, the first indication information is used to indicate to cancel or disable the first SBFD symbol set, and the second indication information is used to indicate the information about the first SBFD symbol set.

69. The information processing apparatus according to claim 68, wherein the first SBFD symbol set is determined through any of:
determining the first SBFD symbol set according to an agreement, wherein information in the agreement comprises taking N consecutive symbols or slots as the first SBFD symbol set starting from an (n+M)^{th} symbol or slot, where n is a symbol or slot within which the first DCI is received, M is an integer greater than or equal to 0, and N is a positive integer;
determining K SBFD symbol sets according to an agreement, wherein the first SBFD symbol set is one symbol set in the K SBFD symbol sets indicated through the first indication information or the second indication information; or
configuring K SBFD symbol sets for the terminal through a signaling, wherein the first SBFD symbol set is one SBFD symbol set in the K SBFD symbol sets indicated through the first indication information or the second indication information.

70. The information processing apparatus according to claim 68, wherein the first indication information is indicated through one or more of an FDRA field, an RV field, an NDI field, an MCS field, and an HARQ process number field.

71. The information processing apparatus according to claim 68, wherein the second indication information is used to indicate a symbol or slot corresponding to the first SBFD symbol set in the form of a bitmap; or
the second indication information comprises a start position and a length of a target symbol or a target slot, wherein the target symbol or the target slot is a symbol or slot comprised in the first SBFD symbol set.

72. The information processing apparatus according to claim 66, further comprising:
a second sending unit configured to send third information to the terminal, wherein the third information is used to indicate SBFD symbol configuration information.

73. The information processing apparatus according to claim 72, wherein the first SBFD symbol set comprises all of or part of SBFD symbols within an SBFD symbol configuration period, and the SBFD symbol configuration period and all the SBFD symbols within the SBFD symbol configuration period are indicated through the SBFD symbol configuration information.

74. The information processing apparatus according to claim 66, further comprising:
a second determination unit configured to determine a valid time for canceling or disabling the first SBFD symbol set;
wherein the valid time is a single SBFD configuration period, or the valid time is a plurality of consecutive SBFD configuration periods.

75. The information processing apparatus according to claim 74, wherein the valid time for canceling or disabling the first SBFD symbol set is:
an SBFD configuration period where the first DCI is located, or an L^{th} SBFD configuration period after the SBFD configuration period where the first DCI is located; or
a plurality of consecutive SBFD configuration periods starting from the SBFD configuration period where the first DCI is located or from a P^{th} SBFD configuration period after the SBFD configuration period where the first DCI is located,
where L and P are integers greater than 0.

76. The information processing apparatus according to claim 66, wherein in a case that a plurality of pieces of first DCI is sent within one SBFD configuration period, contents indicated by the plurality of pieces of first DCI are the same; or
in a case that a plurality of pieces of first DCI is sent within one SBFD configuration period, contents indicated by a first portion of the plurality of pieces of first DCI are the same or different, and contents indicated by a second portion of the plurality of pieces of first DCI are the same.

77. The information processing apparatus according to claim 66, further comprising:
a first reception unit configured to receive feedback information sent by the terminal via an MAC CE, wherein the feedback information is used to indicate whether the first DCI is received.

78. The information processing apparatus according to claim 66, further comprising:
a first processing unit configured to perform one or more of:
in a case that the canceled or disabled first SBFD symbol set comprises a first target symbol and the first target symbol is a symbol configured as a downlink symbol D or a flexible symbol F, determining that a position corresponding to the first target symbol is a downlink symbol D after the first SBFD symbol set is canceled or disabled;
in a case that the canceled or disabled first SBFD symbol set comprises a second target symbol and the second target symbol is a symbol configured as a flexible symbol F, determining that a position corresponding to the second target symbol is an uplink symbol U after the first SBFD symbol set is canceled or disabled;
in a case that the canceled or disabled first SBFD symbol set comprises a third target symbol and the third target symbol is a symbol configured as a flexible symbol F, determining that a position corresponding to the third target symbol is a flexible symbol F after the first SBFD symbol set is canceled or disabled, and performing conflict processing according to a processing mode of the flexible symbol F; and
in a case that the canceled or disabled first SBFD symbol set comprises a fourth target symbol and the fourth target symbol is a symbol configured as a flexible symbol F, determining that a transmission direction on a frequency-domain resource corresponding to an uplink sub-band in the fourth target symbol is downlink after the first SBFD symbol set is canceled or disabled.

79. A processor-readabe storge medium storing therein a comptuer program, wherein the comptuer program is executed by a processor to implement the information processing method according to any one of claims 1 to 26.
